(19) Europäisches Patentamt
European Patent Office
Office européen des brevets

(11) **EP 3 926 303 A1**

(12) **EUROPEAN PATENT APPLICATION**

(43) Date of publication:
**22.12.2021 Bulletin 2021/51**

(51) Int Cl.:
***G01C 21/34*** *(2006.01)* ***G01C 21/30*** *(2006.01)*

(21) Application number: **20180864.9**

(22) Date of filing: **18.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.
80539 München (DE)**

(72) Inventors:
• **FRÜHLING, Wiard
37073 Göttingen (DE)**
• **HAHN, Armin
37077 Göttingen (DE)**

(74) Representative: **Richardt Patentanwälte PartG mbB
Wilhelmstraße 7
65185 Wiesbaden (DE)**

(54) **METHOD AND SYSTEM FOR SNAPPING AN OBJECT S POSITION TO A ROAD NETWORK**

(57) The present subject matter relates to determine a snapping position in a road network for a destination object by using a cost matrix indicative of accumulative cost values of cells of the matrix. The accumulative cost value of a cell is indicating a cost to travel a path from the cell to a road segment of the road network.

FIG. 2A

# Description

## Technical Field

Various example embodiments relate to navigation systems, and more particularly to a method for snapping an object to a road segment of a road network.

## Background

Navigation systems are useful tools for guiding drivers to their destinations based on map matching. Map matching is a technique used in many routing applications to relate a geographical point or a sequence of points to a road network. For sequences of points, a typical application of Map Matching is to determine the most likely driven path of vehicles.

## Summary

Various embodiments provide a method for determining a snapping position in a road network, computer system and computer program product as described by the subject matter of the independent claims. Advantageous embodiments are described in the dependent claims. Embodiments of the present invention can be freely combined with each other if they are not mutually exclusive.

In one aspect, the invention relates to a method for determining a snapping position in a road network. The method comprises:

    a) determining a bounding area, the bounding area comprising road segments of the road network;
    b) determining an initial cost matrix of cells that represents the bounding area, wherein each cell of the initial cost matrix is assigned a cost value indicative of at least one area feature of a subarea of the bounding area represented by said cell;
    c) identifying K source cells of the initial cost matrix that represent the road segments;
    d) determining for each cell of the initial cost matrix and for each source cell an accumulative cost value, the determining resulting in multiple accumulative cost values, wherein the accumulative cost value is a combination of the cost value of said each cell with the cost values of one or more cells of an accumulative cost path between said each cell and said each source cell;
    e) for each cell of the initial cost matrix selecting a least accumulative cost value of the multiple accumulative cost values of said each cell, and determining a least cost path as the accumulative cost path associated with the selected least accumulative cost value;
    f) selecting the source cell of the least cost path determined for a desired destination cell of the initial cost matrix, wherein the selected source cell is associated with a snapping position of the road network.

In another aspect, the invention relates to a snapping system (or computer system). The snapping system is configured for:

    a) determining a bounding area, the bounding area comprising road segments of a road network;
    b) determining an initial cost matrix of cells that represents the bounding area, wherein each cell of the initial cost matrix is assigned a cost value indicative of at least one area feature of a subarea of the bounding area represented by said cell;
    c) identifying K source cells of the initial cost matrix that represent the road segments;
    d) determining for each cell of the initial cost matrix and for each source cell an accumulative cost value, the determining resulting in multiple accumulative cost values, wherein the accumulative cost value is a combination of the cost value of said each cell with the cost values of one or more cells of an accumulative cost path between said each cell and said each source cell;
    e) for each cell of the initial cost matrix selecting a least accumulative cost value of the multiple accumulative cost values of said each cell, and determining a least cost path as the accumulative cost path associated with the selected least accumulative cost value;
    f) selecting the source cell of the least cost path determined for a cell of the initial cost matrix, wherein the source cell is associated with a snapping position of the road network.

In another aspect, the invention relates to a computer program product comprising a computer-readable storage medium having computer-readable program code embodied therewith, the computer-readable program code configured to implement all of the steps of the method according to preceding embodiments.

## Brief Description of the Drawings

The accompanying figures are included to provide a further understanding of examples, and are incorporated in and constitute part of this specification. In the figures:

    Fig.1 is a block diagram of a system in accordance with an example of the present subject matter;

    Fig. 2A is a flowchart of a method for snapping a position of an object to a position on a road segment;

    Fig. 2B depicts a representation of an area of candidate road segments according to an example of the present subject matter;

Fig. 3A is a flowchart of a method for generating an initial cost matrix according to an example of the present subject matter;

Fig. 3B shows an example of intermediate cost matrices and the initial cost matrix;

Fig. 4A is a flowchart of a method for determining optimal paths between source cells and other cells according to an example of the present subject matter;

Fig. 4B shows a pseudocode of an algorithm for determining least cost paths according to an example of the present subject matter;

Fig. 4C shows an example of input matrices of the algorithm;

Fig. 4D shows an example of output matrices of the algorithm;

Fig. 5 illustrates a method for evaluating the snapping point determined in accordance with an example of the present subject matter;

Fig. 6 shows a schematic block diagram of the snapping system in accordance with the present subject matter.

Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may enable a map matching of the position of a destination object to a corresponding position in a road network. The destination object may be a subarea (e.g. a land lot) of the bounding area or an object located in the bounding area. The destination object may, for example, be standing permanently in one place. The object may, for example, be a building such as a house, dormitory, farm, office etc. The building may have one or more entrances and one of the entrances may be used to represent the object. The position of an object may, for example, be defined by latitude and longitude coordinates. The term "position" is interchangeably used with the term "point". According to one embodiment, the destination cell represents the object.

The term "road network" as used herein may refer to a system of interconnecting lines and points that represent a system of roads of a given area. The road network may, for example, be stored as a graph having nodes and edges or links. A road segment is a portion of a road between two points. The points can be adjacent intersections of roads, or points separated by fixed distances. A road segment may be one of different types of road segments. For example, a road segment may include a portion or all of a walking path, biking path, transportation route, roadway or highway.

The term "map matching" as used herein may be a technique to relate one or more geographical points to a respective point on the road network. Relating one geographical point to a respective point on the road network may be referred to as point snapping. Relating more than one geographical point to respective points on the road network may be referred to as road snapping. The road snapping may thus be a combination of multiple individual point snappings.

A bounding area may be an area of interest (AOI). The bounding area covers multiple objects. The bounding area may, for example, be determined based on user inputs. For example, a part of the town Höxter in the south-west of North Rhine-Westphalia (NRW) may be selected as the bounding area. Each cell of the initial cost matrix is assigned a cost value indicative of at least one area feature of a subarea of the bounding area represented by said cell. E.g. each cell represents at least one area feature of the bounding area.

The subareas of the bounding area have characteristics or area features e.g. $F1, F2 ... FN$. An area feature may, for example, indicate the steepness of the terrain, the vegetation density or the Normalized Digital Vegetation Index (NDVI), the presence of a building or any other characteristic that is descriptive of the subarea.

In order to obtain the values of the area features $F1$, $F2...FN$, the present subject matter may make use of existing data sources. The data sources may, for example, comprise an aerial imagery data source, a Light Detection and Ranging (LiDAR) data source etc. The data sources may be configured to provide the values of each of the area features in a predefined format. For example, the data sources may already be configured to provide the values of each of the area features in a gridded or raster format. Raster data may be provided for a grid of cells. Each cell (data) value represents a subarea of the bounding area.

For example, for obtaining the values of the vegetation density in the bounding area, a data source of the data sources may be queried accordingly. The data source may provide a cost surface as a matrix of cells, wherein each cell of the matrix has a cost value that is indicative of the vegetation density in the area covered by the cell. Thus, a cost surface $CS1... CSN$ may be determined for each area feature of the area features $F1, F2 ... FN$ respectively. The cost surfaces $CS1... CSN$ have the same size, the same number of cells and the same cell size. The cell size may not be larger than the subarea covered by the object for which a snapping is to be determined. The cell size may be small enough to capture the required detail but large enough so that computer storage and analysis can be performed efficiently. For example, the smaller the size the more accurate the point snapping is. The present subject matter may define the size of the cells to balance the advantage of the optimal point snapping and the disadvantage of the computational burden. A cell's value of a cost surface may, for example, represent the existence of buildings, slope and vegetation.

The initial cost matrix is a matrix of cells. The initial cost matrix *ICM* may be a combination of two or more cost surfaces *CS1 ... CSN*. Therefore, the initial cost matrix may be called a merged cost surface. For example, the initial cost matrix may be a weighted sum of the two or more cost surfaces e.g. *ICM = w1 ∗ CS1 + w2 ∗ CS2 ... + wN ∗ CSN*. The weights *wi* of the weighted sum may be assigned dependent on user needs. For example, the combined individual cost matrices may be weighted differently to control their individual impact on the initial cost matrix. Thus, each cell of the initial cost matrix may be associated with a cost value which is a weighted sum of values of multiple area features. For example, each cell of the initial cost matrix may be associated with a cost value which is a weighted sum of values indicative of the vegetation density, the steepness and the presence of buildings. The presence of a non-passable building may be weighted similarly like non-passable vegetation but differently than e.g. a passable gravel-path. Cell's values in the initial cost matrix which are classified as non-vegetation, no-buildings and passable may be set to a predefined value e.g. 1.

Cells of the initial cost matrix are defined as source cells if they are located on the road network. Destination Cells may be the centroids of the destination object's footprint or any other cells different from the source cells. Destination cells may, for example, represent the object. Information on the road network and the objects may be provided by other data sources. For example, the road network may be obtained from an Open Street Map (OSM) data source.

The initial cost matrix may be used to determine the least cost path from a destination cell *A* to a source cell *B* of the source cells, wherein cell *A* may be any cell of the initial cost matrix different from the source cells or a cell representing the object. The least cost path may be determined using conventional least cost path determination methods. The snapping point of the least cost path may be the centre of the source cell *B*. The centre of the source cell *B* may have a position $C_p$ with a given latitude and longitude coordinate. The position $C_p$ is the snapping point, if $C_p$ is also a position stored in the road network; otherwise, the snapping point may be the position of the road network that is a closest position to $C_p$. The determined snapping point is a snapping point of the cell *A*. The term "snapping point" is interchangeably used with the term "snapping position".

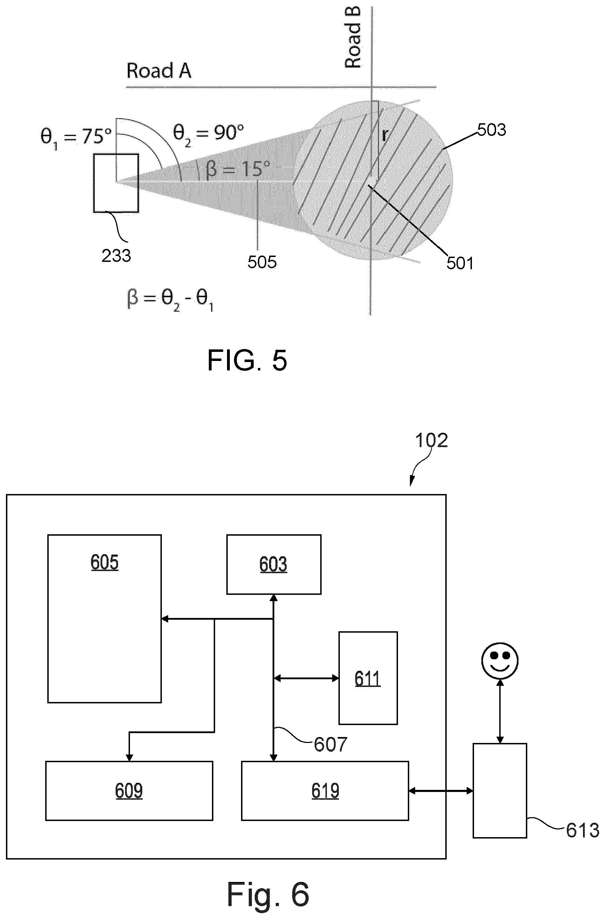

Once determined, the snapping points may be verified or evaluated by the present subject matter (e.g. using the method of Fig. 5). The evaluation may indicate the fraction of correctly determined snapping points.

The point snapping of the destination cell may use cost values of the initial cost matrix to determine a least cost path between one specific source cell of the source cells and the destination cell. The least cost path may connect adjacent cells, wherein two adjacent cells of the path may be on a same diagonal or on same column or a same row of the initial cost matrix.

The present subject matter may be advantageous as it may enable an accurate point snapping of the destination cell because the specific source cell of the least cost path is not the closest distance-wise but rather the cell reached with lowest costs. For example, the accurate point snapping of the destination object may particularly be advantageous as it may enable an optimal access to the destination object e.g. an optimal identification of the snapping point of the destination object may prevent a wrong pick-up and drop-off location in transportation. The result of the point snapping of the destination cell may thus advantageously be used to determine routes that end at the destination object and that may include the least cost path from the snapping point to the destination object.

The present subject matter may have another advantage of saving processing resources because it can control the size of the bounding area. For example, if the user of the method (e.g. a company providing a "snapping-point service") is interested in snapping points for a buildings of the town of Höxter, the bounding area can be limited to an area that is sufficiently large to only include the necessary road segments that surround the buildings e.g. instead of having an area that covers the whole region which besides the town of Höxter also covers additional cities, a smaller area may be sufficient. Hence, the resources that would otherwise be required for processing extra data of the area covering the whole region may be saved.

According to one embodiment, the accumulative cost value of the cell $c_k$ is defined as follows:

$\sum_{i=1}^{n} cost(c_i, c_{i+1}),$ where i=n refers to cell $c_k$, where n is the number of cells of a path between the cell $c_k$ and the source cell, and *cost($c_i$, $c_{i+1}$)* is a combined cost value of two neighbouring cells,

$cost(c_i, c_{i+1}) = \frac{cost_{c_i} + cost_{c_{i+1}}}{2},$ in case the two cells $c_i$ and $c_{i+1}$ are on a same row or same column of the initial cost matrix, where $cost_{c_i}$ is the cost value of the cell $c_i$ in the initial cost matrix, and *cost($c_i$, $c_{i+1}$)* =

$\sqrt{2} \times \frac{cost_{c_i} + cost_{c_{i+1}}}{2},$ in case the two cells $c_i$ and $c_{i+1}$ are on a same diagonal of the initial cost matrix.

The accumulative cost value of the cell $c_k$ may

indicate the cost to travel from a source cell to the cell $c_k$. The accumulative cost value of the cell $c_k$ may also be referred to as the accumulative cost value of a path between the source cell and the cell $c_k$. This embodiment may provide a cost of travelling from one cell to a source cell depending on the spatial arrangement of the cells. This embodiment may thus further improve the point snapping because it uses an accurate and cell dependent cost estimation of the cost to travel through the cells.

The execution of step d) and step e) of the present method may enable to determine the least cost path between a specific source cell and the destination cell. According to one embodiment, the execution of step d) and step e) is performed using Dijkstra's algorithm. For example, the Dijkstra's algorithm may be executed for each source cell of the $K$ source cells by providing the source cell and the initial cost matrix as input to the Dijkstra algorithm. A link weight of a link between the source cell and a cell is the accumulative cost value of the cell. The execution of the Dijkstra's algorithm may result in $K$ accumulative cost values per cell of the initial cost matrix because it processes each source cell of the $K$ source cells separately. The least accumulative cost value of each cell may be the smallest one of the $K$ accumulative cost values. The Dijkstra's algorithm may be modified so that it can use the initial cost matrix as input. For example, the Dijkstra's algorithm may use a virtual graph. The virtual graph may be created as follows. The cell centre of each cell of the initial cost matrix may be used as a node of the virtual graph and the path between two neighbouring cell centres may be used as a link of the virtual graph. The Dijkstra's algorithm uses link weights in order to find an optimal path.

This embodiment may enable to further modify the Dijkstra's algorithm such that a link weight, of a link between the source cell and a cell, is equal to the accumulative cost value to travel from the cell to the source cell. In addition, the Dijkstra algorithm may be modified so that the accumulative cost values are stored temporarily in the accumulative cost matrix. In addition, a direction grid such as a backlink raster, in which each cell's value represents the direction to the next cell on the path to the source cell, is generated. Each of the backlink raster and the accumulative cost matrix has cells corresponding to cells of the initial cost matrix and has the same size of the initial cost matrix. This embodiment may be advantageous as it may enable an optimal and resource saving determination of the least cost path e.g. based on the backlink raster only. The determination of the least cost path may be resource saving because the Dijkstra's algorithm uses an optimized way to find its paths starting from a source cell. According to one embodiment, the determining of the least cost paths comprises creating a Backlink Raster having cells corresponding to cells of the initial cost matrix. The Backlink Raster indicates for each cell of the Backlink Raster a direction towards one of the source cells along the least cost path of the each cell, wherein the least cost path of the destination cell is determined using the Backlink Raster. As mentioned before, the determination of the least cost path for any destination cell may be based on the backlink raster only. Having determined the backlink raster, the accumulative cost values may be discarded. This may have the benefit of providing a quick and resource saving way (both in terms of memory and CPU cost) of enabling the determination of a least cost path.

According to one embodiment, the method further comprises using the snapping position of the destination object for determining a route between a source object and the destination object represented by the destination cell. For example, the snapping position is part of the route between the source object and the destination object. The route may further include the least cost path from the snapping point to the destination object. This embodiment may provide an accurate road snapping because it uses the snapping position of the destination object which is optimally determined by the present subject matter.

According to one embodiment, the method further comprises: performing the method in response to receiving a request to determine a route from a source object to the destination object, and determining a route from the source object to the destination object such that the snapping position is part of the route. The route may further include the least cost path from the snapping point to the destination object. This embodiment may be advantageous as it may seamlessly be integrated in existing navigation systems because routes may be determined using the present subject matter by a slight modification of the existing navigation systems.

According to one embodiment, the method further comprises determining the cost values of the initial cost matrix, wherein the determining of the cost values of the initial cost matrix comprises for each cell: determining a cost value for each feature of the at least one area feature of said cell, and determining a weighted sum of the determined cost values using weights assigned to the at least one area feature, wherein the cost value of said cell is the weighted sum. This embodiment may enable accurate representation of the travel cost through the cells of the initial cost matrix because it may consider terrain specific characteristics of the respective cell and thus bounding area. This may further improve the accuracy of the point snapping in accordance with the present subject matter.

According to one embodiment, the area feature is anyone of: a scenic property, a ground property and a safety level. The more area features are considered, the higher the accuracy of the point snapping.

According to one embodiment, the object is represented by a set of adjacent cells of the cost matrix, wherein the destination cell is the centre cell of the set. The centre of the set of cells may provide a universal representation that works for different shapes of objects.

According to one embodiment, the object is represented by a set of adjacent cells of the cost matrix, wherein the destination cell is an edge cell of the set or an adjacent cell of said edge cell with the lowest accumulative cost value. This embodiment may enable to represent an entrance of a building by the destination cell because the entrance of the building usually covers the edge (or border) cell of the set of cells covered by the building. The entrance of the building may be the optimal/desired destination. This embodiment may thus further improve the point snapping in accordance with the present subject matter.

According to one embodiment, the set of adjacent cells is delimited by a polygon. This embodiment may enable to process different building footprints as most of the objects may cover a set of adjacent cells which are delimited by a polygon.

According to one embodiment, the method further comprises evaluating the snapping position. The evaluation comprises: providing an alternative snapping point of the object, and determining whether the snapping position is within a predefined region around the alternative snapping point. The alternative snapping point may be defined by a predefined alternative technique or may be a user defined reference/true snapping point. If the snapping position is within the predefined region it may be named a correct snapping position. This embodiment may enable to combine the snapping point evaluation of two methods. The snapping point determined in accordance with the present subject matter may be used in case the snapping point is within the predefined region. This may further improve the point snapping determination in accordance with the present subject matter. For example, the result of the evaluation may be provided in association of the result of the point snapping.

According to one embodiment, the region is defined by a maximum distance from the alternative snapping point and a direction which is defined by a maximum allowed difference in bearings between polylines from the destination cell and the alternative snapping point. This embodiment may provide a reliable and accurate evaluation of the snapping points.

According to one embodiment, the method further comprises using the snapping position for route determination if it is within the predefined region. This embodiment may enable to improve the route determination in navigation systems. For example, if the snapping point is not within the predefined region, the route may use the alternative snapping point instead of the determined snapping point.

In one example, the present method may be repeated for different destination objects. This may result in multiple determined snapping points of the destination objects. The evaluation may also be repeated for the multiple snapping points. If the faction of the correct snapping points is higher than a predefined threshold, this may validate the present method or may be used to adapt the method by, for example, changing the size of the initial cost matrix or increasing the number of used area features etc. The method may thus further be used in one or more routing applications.

According to one embodiment, the method further comprises: performing step f) in response to receiving a request to determine a route from the source object to the destination object.

According to one embodiment, the destination cell represents an object inside the bounding area.

According to one embodiment, the object is represented by a set of adjacent cells of the cost matrix, wherein the destination cell is the centre cell of the set.

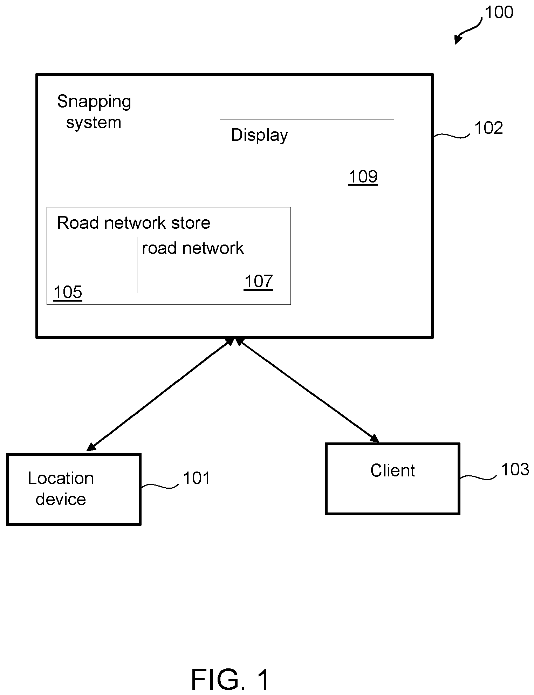

**Fig.** 1 is a block diagram of a system 100 in accordance with an example of the present subject matter. The system 100 may include at least one location device 101, a snapping system 102, and one or more clients 103. Although shown as separate components, the location device 101 and/or the snapping system 102 and/or the clients 103 may, in one example, form an integral part of the system 100. In one example, the location device 101, the snapping system 102 and the client 103 may communicate through a network. The network comprises, for example, a wireless local area network (WLAN) connection, WAN (Wide Area Network) connection, LAN (Local Area Network) connection, the Internet or a combination thereof.

The system 100 of Fig. 1 may be configured to perform the point snapping in accordance with the present subject matter. The result of the point snapping performed by the system 100 may further be used for different purposes. For example, the result of the point snapping may be used to determine a route. In another example, the result of the point snapping may be used as metadata. In one example, the metadata may be defined or pre-processed for a given bounding area by determining the snapping points of every location in the bounding area using the present subject matter. For example, the bounding area, e.g. a city, may be subdivided in a multitude of subareas, wherein for each subarea the associated snapping point of the object covered by the subarea is pre-determined or pre-computed in accordance with the present subject matter. For example, the bounding area may only cover individual cities, countries or even whole continents. The size of the subareas may range from $1m^2$ in densely populated areas up to $100m^2$ in rural areas. However, these numbers are only to be considered exemplary and not to be considered limiting for the present subject matter.

Furthermore, the metadata may, for example, be provided in a lookup table. The lookup table may comprise entries that associate positions representing the subareas (e.g. comprising buildings) of the bounding area to corresponding pre-computed snapping points. For example, an application programming interface (API) may be provided. The API enables access to the metadata.

The location device 101 may be generally understood as any device or tool which provides a spatial location for which a snapping point is to be determined. The location device 101 may be implemented in various variants.

In one variant, the location device 101 may be configured to determine its location through geo-spatial position satellites. The current location of the location device 101 may be indicative of a location of a building or a vehicle etc. in which the location device 101 is currently located. A practical scenario could be that a first user carrying the location device 101, e.g. as a mobile phone, wants to indicate his current location to a second user. For that, the location of the location device which is indicative of the location of the building may be used to determine a snapping point for the current position or location of the first user. The first user may provide the determined snapping point to the second user so that he can join the first user using a route that ends at the snapping point. In this example, the location device 101 is configured to determine its location through geo-spatial position satellites. For that, the location device 101 may, for example, use any of the Global Positioning System (GPS), the GLONASS system, COMPASS and BeiDou navigation systems, the Galileo positioning system, or the Indian Regional Navigational Satellite System of India. The location device 101 may, for example, comprise a GNSS receiver to receive several sources of differential GNSS signals.

The snapping system 102 may include a road network store 105. The road network store may e.g. be a computer memory. The road network store 105 may maintain a road network graph 107, which includes data about anyone of the location, condition and layout of roads. The road network store 105 may store road segments and additional data about the roads, such as the direction of travel on the roads (e.g., one-way or two-way travel), turn restrictions, traffic rule information, and the like.

In order to perform the determination of a snapping point of an object in accordance with the present subject matter, the snapping system 102 may require information about the location of the object. This information about the location of the object may, for example, enable to identify cells of the initial cost matrix or more preferably the backlink raster that represent the object. This information about the location of the object may, for example, be provided by the location device 101. In one example, this information may be received from the location device 101. In another example, and if the client 103 and the location device 101 form an integral part, as described above, the client 103 may send this information to the snapping system 102.

The information about the location of the object may, for example, be provided by the location device 101 as follows. A user input indicative of the object may be received at a user interface of the location device 101. In one example, the user input may comprise an address of the object. The address may further be converted by the location device 101 into coordinates indicative of the location of the object. The conversion may, for example, be performed using an address to coordinates converter.

The address to coordinates converter may, for example, be provided by a cloud service. The address to coordinates converter may use one or more databases for address conversion.

In another example, and if the object is a building, the information about the location of the object may indicate an entrance of the object. For that purpose, the address of the object or the object itself may be tagged with a label indicating the location of its entrance. This may enable to find a cell of the initial cost matrix that is associated with the entrance of the building.

The snapping system 102 may be configured to snap the geographic data from a particular position to a road segment of the road network graph 107 based on the present subject matter, e.g. using the above mentioned lookup-table. The snapping refers to the association or mapping of a position indicated by the location device 101, to a position on a road segment.

The above described method may be used in various ways. Preferably, the snapping system 102 is configured to use the lookup table to quickly identify the snapping point associated with the geo-coordinates or the information of the subarea.

Thus, the application may be to build up a dataset which comprises associations between objects or object locations and associated snapping points. Preferably, the dataset may also comprise the respective least cost path from the object to said snapping point, which was described above as the lookup table (or more generally pre-computed dataset) with metadata. The least cost paths may be stored using direction indications along the path only (e.g. as it was described above regarding the backlink-raster). This may be beneficial in that for any subsequent route planning between any source location and the object, the snapping point associated with the object as well as optionally the least cost path may be used as part of the route and is readily available.

In a further example, in general, route planning between a source location and the object may determine the snapping point of the object and determine a route between the source location and the snapping point. The route may be determined using conventional route calculation means.

The present subject matter may be advantageous as it may be used to accurately determined routes. For example, a person willing to move (walk or drive) from its current location to a destination may request a route between its current location and the destination. The request may, for example, be received by the snapping system. The snapping system may further be configured to receive a current starting location data of the user and perform road snapping of the location data. In particular, the snapping system may perform the point snapping in accordance with the present subject matter in order to identify the snapping point. The snapping system or any other means may be further used to determine a route from the snapping point to the destination.

The snapping system 102 may further comprise a display 109 to provide a graphical representation of portions of the road network 107. The snapping system 102 may further be configured to receive data from one or more data sources (not shown). The data sources may, for example, be LiDAR systems.

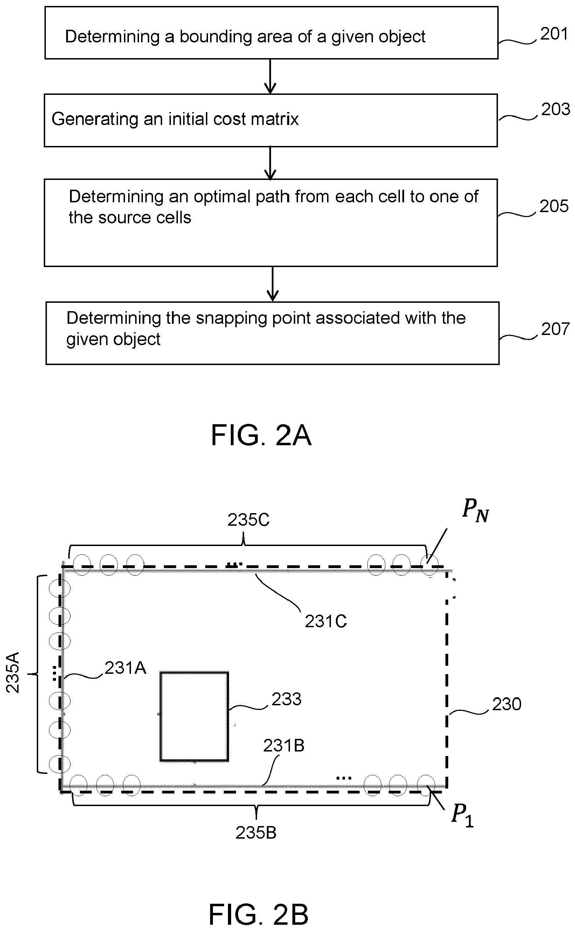

The snapping system 102 may be configured to operate in accordance with a server-client configuration with the clients 103. For example, the snapping system 102 may receive requests from the clients to determine a snapping point on one of the routes of the road network 107 with respect to a certain object, like object 233 as will be discussed below with respect to Fig. 2B. For example, if the client 103 and the location device 101 form an integral part, as described above, the snapping system 102 may further receive from the client 103 information indicative of the position of the destination object (like object 233) of the route. Upon receiving the request, the snapping system 102 may perform at least part of the present subject matter.

In order to explain in more detail the present method of determining the snapping points, it is assumed, in the following, without restriction to generality that the snapping points are calculated and not retrieved from a table.

**Fig. 2A** is a flowchart of a method for snapping a position of an object to a position on a road segment. For the purpose of explanation, the method described in Fig 2A may be implemented in the system illustrated in Fig. 1, but is not limited to this implementation.

The method starts at step 201, where the snapping system 102 determines a bounding area In one example, step 201 may be performed in response to receiving by the snapping system 102 a request from one of the clients 103 to determine a route to the given object. The given object may have a geographic position such as the latitude and longitude coordinates. In another preferred example, step 201 may be performed in response to receiving by the snapping system 102 a request from one of the clients 103 to determine for the whole bounding area snapping points for any object located within the bounding area. It has to be noted here, that the latter request may be rather unspecific and may even not indicate individual objects as such.

Fig. 2B illustrates an example bounding area 230. The bounding area 230 comprises road segments 231A, 231B and 231C of the road network 107. Further, a given object 233 is exemplary indicated. The given object 233 may be a building. The snapping system 102 may determine the bounding area 230 based on a user input. For example, the user input may indicate the position of the object 233 or name of a town in which the object is located e.g. Höxter. In another example, the user may indicate the bounding area by means of geocoordinates indicating the outer limits of the bounding area. The bounding area may also be indicated using a name of a region or even a whole country. It is understood that in case of a name of a city, region or country tools are required that "translate" this indication to geocoordinates indicating the outer limits of the bounding area. The bounding area may, for example, be determined as a square-shaped or circular-shaped area of a predetermined size, e.g. 1 km², that is located at the centre of Höxter. The location of the bounding area may, for example, be determined based on the position data of the given object 233 e.g. if the object 233 is located in the center of Höxter the bounding area may be located in the center. Generally, the object 233 may be located in the center. The position data 233 may, for example, be received from the location device 101. In another example, the position data of the given object 233 may be received from the user as part of the user input.

As shown in Fig. 2B, the road segments 231A through 231C pass through a plurality of positions $P_1$ to $P_N$ with latitude and longitude coordinates. Each road segment of the road segments 231A through 231C passes through a respective subset of positions 235A through 235C. These positions $P_1$ to $P_N$ on the road segments may be used for snapping the position of the given object 233 to the road network 107.

After determining the bounding area 230, the method proceeds to step 203, where the snapping system 102 generates an initial cost matrix of cells. The initial cost matrix represents the bounding area 230. The initial cost matrix may comprise $K$ source cells $SC_1...SC_K$ that represent the road segments 235A though 235C. The remaining $L$ cells of the initial cost matrix may be referred to as cells $C^1... C^L$. Each source cell of the source cells may represent a portion of a road and passes through at least one position of the positions $P_1$ to $P_N$.

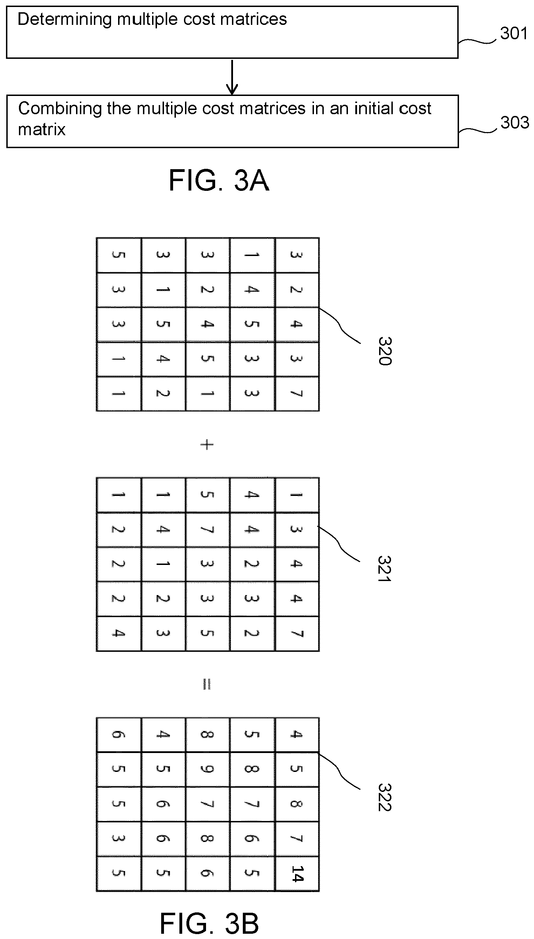

The initial cost matrix may, for example, be stored as a file. The file may comprise information about coordinates of the cells and additional information. The additional information may comprise initial cost values assigned to the respective cells of the initial cost matrix. The cost value of a cell may indicate a cost to travel or move through the cell. For example, the cost value of a cell may be a combination of values of one or more area features of a subarea of the bounding area represented by said cell. The area feature may, for example, indicate the presence of a slope, a vegetation, terrain characteristics etc. Figs. 3A and 3B provide an example for determining the cost values of the initial cost matrix.

The initial cost matrix may provide a cost surface that enables to find an optimal path with a least accumulated cost between a source cell of the source cells and another cell of the initial cost matrix. Using the cell representation may be advantageous as it may enable a simplified storage of the data representing the bounding area while still enabling usage of graph-based tools. This is because each cell center of the initial cost matrix may be used as a node and the length between two neighboring cell centers may be used as a link. The links may be used to define paths. Another advantage of using cell structures may be to make use of existing data sources such as LiDAR sources to obtain pre-computed matrices of the bounding area.

In one example, all possible links between cells of the initial cost matrix may be used in order to determine a path in accordance with the present method. This may be advantageous as it may provide an accurate estimation of the optimal path. This may particularly be advantageous if the size of the bounding area is smaller than a predefined maximum size because a small bounding area may result in a small number of cells to be processed e.g. if the bounding area is 1000 m2, the number of cells may be an order of magnitude smaller than the number of cells of an area of 1 km2. In other words, if the size of the initial cost matrix is small, a developer may always have sufficient processing resources to compute the paths in quick way. The size of the bounding area may be the number of cells in the initial cost matrix or may be the size of the surface covered by the bounding area. However, if the size of the bounding area is higher than the maximum size, the number of links may exponentially increase. This high number of links may increase the total computation effort, since there may be more alternative routes to choose from. Thus, in an alternative example, the determination of the path may be performed by limiting the number of links. The number of links may be limited by considering a neighborhood relationship such that a given cell of the initial cost matrix may only connect to a specific set of cells. This may also constrain the direction of the path. The number of links may be limited in case the size of the bounding area is higher than the predefined maximum size. For example, a neighborhood relationship according to the Rook's pattern may limit the number of direct neighboring cells of a given cell to four. In another example, a neighborhood relationship according to the Queen's pattern may limit the number of direct neighboring cells of a given cell to eight. Using the neighborhood relationship may enable to control the determination of paths.

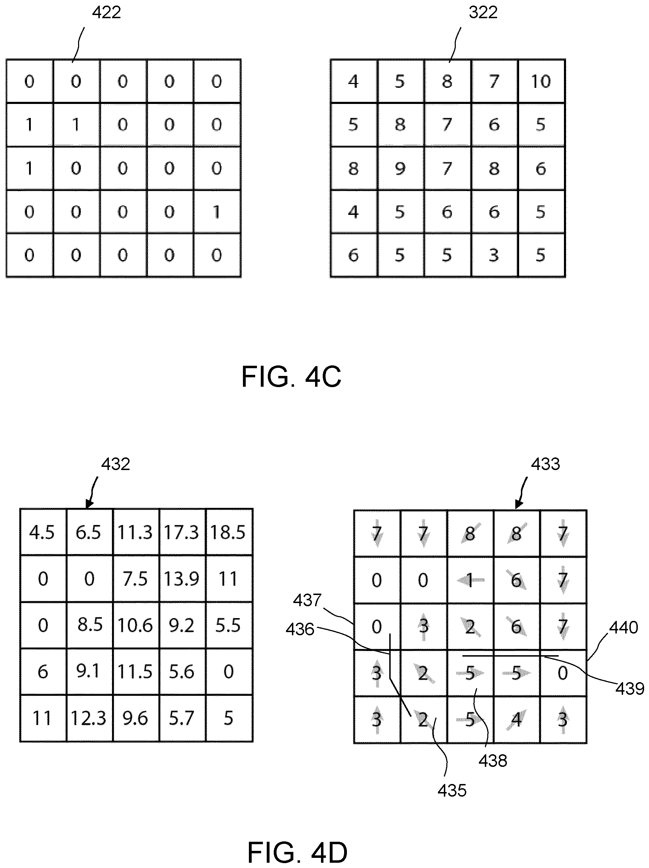

The method proceeds to step 205 where the snapping system 102 determines an optimal path from each cell to one of the source cells $SC_1...SC_K$. Step 205 may, for example, result in a backlink raster 433 as shown in Fig. 4D.

In one example, there may be a need to associate an object like the given object 233 with single one of the cells (called "object cell") even though the given object is represented by more than one cell. For example, the given object may cover a set of adjacent cells. The object cell may be the centroid of the set of adjacent cells. This may be advantageous as it may provide an optimal path depending on the shape of the building. In another example, the object cell may be the cell representing the entrance of the building, which is a cell anywhere on the outer line of the building footprint. This may enable to find the optimal path independent of the shape of the building.

Each path between a source cell $SC_i$ ($i$ = 1 ...$K$) and a destination cell $C^J$ ($j$ = 1... $L$) may be associated with an accumulative cost value. The path between the source cell $SC_i$ and the destination cell $C^j$ may comprise zero or more intermediate cells $C^h$($h$ = 0 ... and $h \neq j$). The number $n$ of cells of the path may then be higher than or equal to two ($n \geq 2$). The accumulative cost value of the path may be referred to as the accumulative cost value of the destination cell $C^j$ of that path. The accumulative cost value of the cell $C^j$ may be defined as follows:

$$\sum_{k=1}^n cost(C^k, C^{k+1}),$$ where $k = n$ refers to cell $C^j$, and $cost(C^k, C^{k+1})$ is a combined cost values of two neighbouring cells,

$$cost(C^k, C^{k+1}) = \frac{cost_{C^k} + cost_{C^{k+1}}}{2},$$ in case the two cells $C^k$ and $C^{k+1}$ are on a same row or same column of the initial cost matrix, where $cost_{C_k}$ is the initial cost value of the cell $C^k$ obtained from the initial cost matrix,

$$cost(C^k, C^{k+1}) = \sqrt{2} \times \frac{cost_{C^k} + cost_{C^{k+1}}}{2},$$ and

in case the two cells $C^k$ and $C^{k+1}$ are on a same diagonal of the initial cost matrix.

The optimal path (determined in step 205) linking each cell to one of the source cells $SC_1...SC_K$ may be the path associated the lowest accumulative cost value.

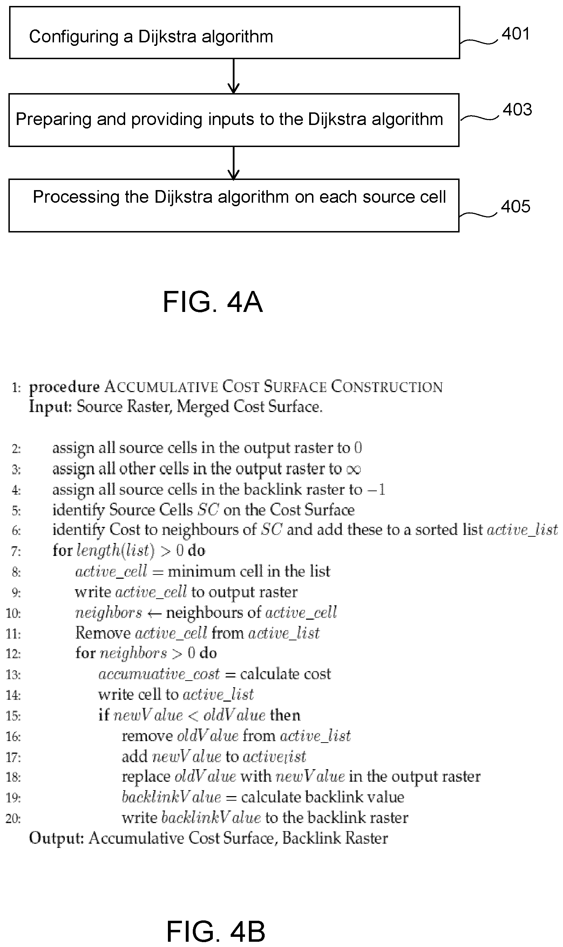

For example, the determination of the optimal path between a cell $C^j$ and one of the source cells $SC_1...SC_K$ may be performed by processing each source cell separately to find a group $G_i$ of one or more (alternative) paths that link said source cell to the cell $C^j$, wherein each path has an accumulative cost value. The accumulative cost values of all paths may be compared to identify the lowest accumulative cost value and the associated optimal path which is the least accumulative cost path. Figs. 4A-4D provide an example for the execution of step 205.

After determining the optimal paths, the method proceeds to step 207, where the snapping system 102 selects or identifies the source cell of the optimal path of a certain cell of the cells $C^1... C^L$ e.g. the certain cell may represent the given object 233. The snapping system 102 determines in step 207 the snapping point associated with (or correspond to) the location of the selected source cell as the snapping point of the certain cell. Assuming, for example, that the optimal path determined for the certain starts at the source cell $SC_2$, the snapping point may, for example, be a position of the positions $P_1$ to $P_N$ that is associated with the source cell $SC_2$ of the optimal path. The determined snapping point may be an ideal snapping point on the road network 107, which is most likely accessible from the building 233.

Step 207 may, for example, be performed by first determining or identifying the optimal path, e.g. on the backlink raster, that links the certain cell to a source cell. The centre of the source cell of the identified optimal path may have a position Cp with a given latitude and longitude coordinate. The position Cp is the snapping point, if Cp is also a position stored in the road network; otherwise, the snapping point may be the position of the road network that is a closest position to Cp. The determined snapping point is a snapping point of the certain cell.

The set of snapping points may be stored in association with information indicative of the cells. In one example, the snapping position may be stored in association with information indicative of the given object. This may enable to determine routes (at a later point of time) in destination to the given object, wherein the routes end at the snapping position.

**Fig. 3A** is a flowchart of a method for determining an initial cost matrix in accordance with an example of the present subject matter. For the purpose of explanation, the method described in Fig 3A may be implemented in the system illustrated in Fig. 1 and may be described with reference to Fig. 3B, but is not limited to these implementations. The method of Fig. 3A provides an example implementation of step 203.

The method starts at step 301, where the snapping system 102 determines multiple cost matrices 320 and 321 (called intermediate cost matrices) as shown in Fig. 3B. For simplification of the description, Fig. 3B shows two intermediate cost matrices, but it is not limited to. The cell values of each intermediate cost matrix of the multiple intermediate cost matrices 320-321 may be the values of a respective area feature. For example, the cell values of the intermediate cost matrix 320 may be indicative of the steepness of the terrain represented by the respective cells e.g. the intermediate cost matrix 320 may thus be referred to as a slope raster. The cell values of the intermediate cost matrix 321 may be indicative of the vegetation density at the respective cells e.g. the intermediate cost matrix 320 may thus be referred to as a vegetation raster.

The intermediate cost matrices 320 and 321 may be combined in step 303 by the snapping system 102 in order to generate the initial cost matrix 322. The combination may, for example, be a sum of the values of the corresponding cells of the intermediate cost matrices 320 and 321. In another example, the combination may be performed such that each individual intermediate cost is weighted differently to control the individual impact on the initial cost matrix 322. The cell value $cost12_{ij}$ (where i and j are indices of the rows and columns of the initial cost matrix 322) of a cell of the initial cost matrix 322 may be a weighted sum of the cell values $cost1_{ij}$ and $cost2_{ij}$ of the corresponding cells in the intermediate cost matrices 320 and 321 respectively. The weighted sum may be defined as follows $cost12_{ij} = w_1 \times cost1_{ij} + w_2 \times cost2_{ij}$, where $w_1$ and $w_2$ are predefined weights associated with the intermediate cost matrices 320 and 321 respectively.

**Fig. 4A** is a flowchart of a method for determining optimal paths between source cells and other cells in accordance with an example of the present subject matter. For the purpose of explanation, the method described in Fig 4A may be implemented in the system illustrated in Fig. 1, but is not limited to this implementation. The method of Fig. 4A provides an example implementation of step 205.

The method starts at step 401, where the snapping system 102 configures a Dijkstra algorithm in order to provide a modified Dijkstra algorithm in accordance with the present subject matter. A pseudocode of the modified Dijkstra algorithm is shown in Fig. 4B. The Dijkstra algorithm is configured to use a (virtual) graph representation of the initial cost matrix, where each cell center represents a node of the graph. Each node is connected to all adjacent nodes by edges or links of the graph, depending on the neighborhood type being used. The link weight, of a link between a source node representing a source cell and another node representing another cell, used by Dijkstra algorithm may be defined in accordance with the present subject matter as an accumulative cost of travelling from the cell to the source cell. The accumulative cost value of a cell $c_k$ is defined as follows:

$\sum_{i=1}^{n} cost(c_i, c_{i+1})$, where i=n refers to cell $c_k$, where n is the number of cells of a path between the cell $c_k$ and a source cell, and $cost(c_i, c_{i+1})$ is a combined cost value of two neighbouring cells, $cost(c_i, c_{i+1}) = \frac{cost_{c_i} + cost_{c_{i+1}}}{2}$, in case the two cells $c_i$ and $c_{i+1}$ are on a same row or same column of the initial cost matrix, where $cost_{c_i}$ is the cost value of the cell $c_i$ in the initial cost matrix, and

$$cost(c_i, c_{i+1}) = \sqrt{2} \times \frac{cost_{c_i} + cost_{c_{i+1}}}{2},$$ in case the two cells $c_i$ and $c_{i+1}$ are on a same diagonal of the initial cost matrix.

Thus, the algorithm is configured to receive as input the initial cost matrix and a source matrix 422 as shown in Fig. 4C. The source matrix 422 indicates which cell of the initial cost matrix 322 is a source cell (e.g. associated with value 1) and which cell of the initial cost matrix 322 is not a source cell (e.g. associated with a value 0). Furthermore, the algorithm is configured to generate an accumulative cost matrix based on the initial cost matrix 322 by a spreading function which calculates the minimum total cost for reaching the closest source cell and stores information about the path. The accumulative cost matrix has cells corresponding to cells of the initial cost matrix and has the same size of the initial cost matrix. For example, while processing the algorithm, multiple accumulative cost values may be found for a same cell of the accumulative cost matrix. An accumulative cost value may be stored temporarily in the accumulative cost matrix and replaced by another smaller accumulative cost value of said cell. In addition, a direction grid such as a backlink raster, in which each cell's value represents the direction to the next cell on the path to the source cell, is generated.

The pseudocode of Fig. 4B summarises the above performed configurations. The accumulative cost matrix is initialized as indicated in lines 2-3. The backlink raster is initialized as indicated in line 4. The iterative process indicated by lines 7 to 20 may be repeated for each source cell of the source cells of the input initial cost matrix. During the iterative process, the following may, for example, be performed. The lowest value in the active_list is removed from the active_list (line 11) in every iteration. All neighbours of the cell are identified (line 10). For all neighbors, the accumulative costs to the closest source cell are calculated (line 13) and the neighbor is added to the active_list (line 14). If the cost for a neighboring cell is lower than the already calculated accumulative cost of that cell in an earlier iteration (line 15), the old value in the active_list is replaced by the lower value (lines 16 - 17). The old value is also replaced by the lower value in the output raster (line 18). Moreover, the coded direction value is calculated (line 19) and written to the backlink raster (line 20).

The initial cost matrix 322 and the source matrix 422 may be provided as input in step 403 to the modified algorithm. The modified algorithm may then be executed in step 405. The output of the modified algorithm is the (final) accumulative cost matrix 432 and the related backlink raster 433 as shown in Fig. 4D. The cell values are shown in the Figures for illustration purpose.

The backlink raster 433 may be used to determine the optimal path of each cell of the initial cost matrix which is not a source cell. For example, the optimal path of the cell 435 may be the path 436 linking the cell 435 to the source cell 437. The position of the road network associated with the source cell 437 may be the optimal snapping point for the cell 435. The optimal path of the cell 438 may be the path 439 linking the cell 438 to the source cell 440. In this case, the position of the road network associated with the source cell 440 may be the optimal snapping point for the cell 438. Thus, the optimal snapping point may be different depending on which object cell is used to represent a building.

The present subject matter may further enable to validate or evaluate the determined snapping points. For example, as illustrated in Fig. 5, a reference snapping point 501 of the given object 233 may be determined. The reference snapping point 501 may be user defined e.g. it represents a true/ideal snapping point. A snapping region 503 (dashed area of Fig. 5) may be provided. The snapping region 503 is defined by a vector 505 from the centroid of the object 233 to the reference snapping point 501, a maximum distance which is defined by $r$ and a direction which is defined by the maximum allowed difference in bearings. In this example, the allowed difference in bearings $\beta$ between $\theta_1$ and $\theta_2$ is 15 and the allowed difference in distance is defined by $r$. The evaluation of the determined snapping point may be performed by checking if the determined snapping point is within the snapping region 503. If it is within the snapping region 503, the snapping point may further be used to determine routes to the object 233.

**Fig. 6** shows a schematic block diagram of a computer system such as the snapping system 102 in accordance with an example of the present subject matter.

The components of the computer system 102 may include, but are not limited to, one or more processors or processing units 603, a storage system 611, a memory unit 605, and a bus 607 that couples various system components including memory unit 605 to processor 603. The storage system 611 may include for example a hard disk drive (HDD). The memory unit 605 may include computer system readable media in the form of volatile memory, such as random access memory (RAM) and/or cache memory.

The computer system 102 may also communicate with one or more external devices such as a keyboard, a pointing device, a display 613, etc.; one or more devices that enable a user to interact with computer system 102; and/or any devices (e.g., network card, modem, etc.) that enable the computer system 102 to communicate with one or more other computing devices. Such communication can occur via I/O interface(s) 619. Still yet, the computer system 102 can communicate with one or more networks such as a local area network (LAN), a general wide area network (WAN), and/or a public network (e.g., the Internet) via a network adapter 609. As depicted, the network adapter 609 communicates with the other components of the client system 102 via bus 207.

The memory unit 605 is configured to store applications that are executable on the processor 603. For example, the memory unit 605 may comprise an operating system as well as one or more application programs. The application programs comprise instructions that when executed enable to perform at least part of the method described with reference to Fig. 2A, 3A, 4A or 5.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

1. A method for determining a snapping position in a road network, comprising:

   a) determining a bounding area, the bounding area comprising road segments of the road network;
   b) determining an initial cost matrix of cells that represents the bounding area, wherein each cell of the initial cost matrix is assigned a cost value indicative of at least one area feature of a subarea of the bounding area represented by said cell;
   c) identifying K source cells of the initial cost matrix that represent the road segments;
   d) determining for each cell of the initial cost matrix and for each source cell an accumulative cost value, the determining resulting in multiple accumulative cost values, wherein the accumulative cost value is a combination of the cost value of said each cell with the cost values of one or more cells of an accumulative cost path between said each cell and said each source cell;
   e) for each cell of the initial cost matrix selecting a least accumulative cost value of the multiple accumulative cost values of said each cell, and determining a least cost path as the accumulative cost path associated with the selected least accumulative cost value;
   f) selecting the source cell of the least cost path determined for a desired destination cell of the initial cost matrix, wherein the selected source cell is associated with a snapping position of the road network.

2. The method of claim 1, further comprising determining the cost values of the initial cost matrix comprising for each cell: determining cost values for the features of the at least one area feature of said cell, and determining a weighted sum of the determined cost values using weights assigned to the at least one area feature based on the type of the at least one area feature, wherein the cost value of said cell is the weighted sum.

3. The method of any of the preceding claims, the area feature being indicative of anyone of: a vegetation density, a steepness and a presence of a building.

4. The method of any of the preceding claims, wherein the accumulative cost value of the cell $c_k$ is defined

as follows: $\sum_{i=1}^{n} cost(c_i, c_{i+1})$, where i=n refers to cell $c_k$, where n is the number of cells of a path between the cell $c_k$ and the source cell, and $cost(c_i, c_{i+1})$ is a combined cost value of two neighbouring cells,

$$cost(c_i, c_{i+1}) = \frac{cost_{c_i} + cost_{c_{i+1}}}{2},$$ in case the two cells $c_i$ and $c_{i+1}$ are on a same row or same column of the initial cost matrix, where $cost_{c_i}$ is the cost value of the cell $c_i$ in the initial cost matrix, and

$$cost(c_i, c_{i+1}) = \sqrt{2} \times \frac{cost_{c_i} + cost_{c_{i+1}}}{2},$$ in case the two cells $c_i$ and $c_{i+1}$ are on a same diagonal of the initial cost matrix.

5. The method of any of the preceding claims, wherein the execution of step d) and step e) comprises: for each source cell of the K source cells executing the Dijkstra's algorithm by providing the source cell and the initial cost matrix as input to the Dijkstra algorithm, wherein a link weight of a link between the source cell and another cell is the accumulative cost value of the cell, resulting in K accumulative cost values per cell of the initial cost matrix, wherein the least cost accumulative cost value of each cell is the smallest one of the K accumulative cost values.

6. The method of any of the preceding claims, the determining of the least cost paths comprising creating a Backlink Raster having cells corresponding to cells of the initial cost matrix, the Backlink Raster indicating for each cell of the Backlink Raster a direction towards one of the source cells along the least cost path of the each cell, wherein the least cost path of the destination cell is determined using the Backlink Raster.

7. The method of any of the preceding claims, further comprising using the snapping position for determining a route between a source object and a destination object represented by the destination cell.

8. The method of claim 7, further comprising: performing step f) in response to receiving a request to determine a route from the source object to the destination object.

9. The method of any of the preceding claims, the destination cell representing an object inside the bounding area.

10. The method of claim 9, the object being represented by a set of adjacent cells of the cost matrix, wherein the destination cell is the centre cell of the set.

11. The method of claim 9, the object being represented by a set of adjacent cells of the cost matrix, wherein the destination cell is an edge cell of the set or an adjacent cell of said edge cell with the lowest accumulative cost value.

12. The method of any of the preceding claims, further comprising evaluating the snapping position comprising: providing an alternative snapping point of the destination cell, determining whether the snapping position is within a predefined region around the alternative snapping point.

13. The method of claim 12, the region being defined by a maximum distance from the alternative snapping point and a direction which is defined by a maximum allowed difference in bearings between polylines from the destination cell and the alternative snapping point.

14. The method of claim 12 or 13, further comprising using the snapping position for route determination if it is within the predefined region.

15. A snapping system for a navigation system, the snapping system being configured for:

a) determining a bounding area, the bounding area comprising road segments of a road network;
b) determining an initial cost matrix of cells that represents the bounding area, wherein each cell of the initial cost matrix is assigned a cost value indicative of at least one area feature of a subarea of the bounding area represented by said cell;
c) identifying K source cells of the initial cost matrix that represent the road segments;
d) determining for each cell of the initial cost matrix and for each source cell an accumulative cost value, the determining resulting in multiple accumulative cost values, wherein the accumulative cost value is a combination of the cost value of said each cell with the cost values of one or more cells of an accumulative cost path between said each cell and said each source cell;
e) for each cell of the initial cost matrix selecting a least accumulative cost value of the multiple accumulative cost values of said each cell, and determining a least cost path as the accumulative cost path associated with the selected least accumulative cost value;
f) selecting the source cell of the least cost path determined for a cell of the initial cost matrix, wherein the source cell is associated with a snapping position of the road network.

16. A computer program product comprising a computer-readable storage medium having computer-readable program code embodied therewith, the computer-readable program code configured to implement all of the steps of the method of any of the preceding claims 1 to 14.

100

Snapping
system

Display

109

102

Road network store

road network

107

105

Location
device

101

Client

103

FIG. 1

| Determining a bounding area of a given object | 201 |

↓

| Generating an initial cost matrix | 203 |

↓

| Determining an optimal path from each cell to one of the source cells | 205 |

↓

| Determining the snapping point associated with the given object | 207 |

## FIG. 2A

## FIG. 2B

| Determining multiple cost matrices | 301 |
|---|---|

↓

| Combining the multiple cost matrices in an initial cost matrix | 303 |
|---|---|

# FIG. 3A

320

| 5 | 3 | 3 | 1 | 3 |
|---|---|---|---|---|
| 3 | 1 | 2 | 4 | 2 |
| 3 | 5 | 4 | 5 | 4 |
| 1 | 4 | 5 | 3 | 3 |
| 1 | 2 | 1 | 3 | 7 |

+

321

| 1 | 1 | 5 | 4 | 1 |
|---|---|---|---|---|
| 2 | 4 | 7 | 4 | 3 |
| 2 | 1 | 3 | 2 | 4 |
| 2 | 2 | 3 | 3 | 4 |
| 4 | 3 | 5 | 2 | 7 |

=

322

| 6 | 4 | 8 | 5 | 4 |
|---|---|---|---|---|
| 5 | 5 | 9 | 8 | 5 |
| 5 | 6 | 7 | 7 | 8 |
| 3 | 6 | 8 | 6 | 7 |
| 5 | 5 | 6 | 5 | 14 |

# FIG. 3B

Configuring a Dijkstra algorithm 401

Preparing and providing inputs to the Dijkstra algorithm 403

Processing the Dijkstra algorithm on each source cell 405

# FIG. 4A

1: **procedure** ACCUMULATIVE COST SURFACE CONSTRUCTION
Input: Source Raster, Merged Cost Surface.

2:     assign all source cells in the output raster to 0
3:     assign all other cells in the output raster to $\infty$
4:     assign all source cells in the backlink raster to $-1$
5:     identify Source Cells $SC$ on the Cost Surface
6:     identify Cost to neighbours of $SC$ and add these to a sorted list $active\_list$
7:     **for** $length(list) > 0$ **do**
8:         $active\_cell$ = minimum cell in the list
9:         write $active\_cell$ to output raster
10:         $neighbors$ ← neighbours of $active\_cell$
11:         Remove $active\_cell$ from $active\_list$
12:         **for** $neighbors > 0$ **do**
13:             $accumuative\_cost$ = calculate cost
14:             write cell to $active\_list$
15:             **if** $newValue < oldValue$ **then**
16:                 remove $oldValue$ from $active\_list$
17:                 add $newValue$ to $active_list$
18:                 replace $oldValue$ with $newValue$ in the output raster
19:                 $backlinkValue$ = calculate backlink value
20:                 write $backlinkValue$ to the backlink raster
    Output: Accumulative Cost Surface, Backlink Raster

# FIG. 4B

422

| 0 | 0 | 0 | 0 | 0 |
|---|---|---|---|---|
| 1 | 1 | 0 | 0 | 0 |
| 1 | 0 | 0 | 0 | 0 |
| 0 | 0 | 0 | 0 | 1 |
| 0 | 0 | 0 | 0 | 0 |

322

| 4 | 5 | 8 | 7 | 10 |
|---|---|---|---|---|
| 5 | 8 | 7 | 6 | 5 |
| 8 | 9 | 7 | 8 | 6 |
| 4 | 5 | 6 | 6 | 5 |
| 6 | 5 | 5 | 3 | 5 |

# FIG. 4C

432

| 4.5 | 6.5 | 11.3 | 17.3 | 18.5 |
|-----|-----|------|------|------|
| 0 | 0 | 7.5 | 13.9 | 11 |
| 0 | 8.5 | 10.6 | 9.2 | 5.5 |
| 6 | 9.1 | 11.5 | 5.6 | 0 |
| 11 | 12.3 | 9.6 | 5.7 | 5 |

433

# FIG. 4D

Road A

Road B

$\theta_1 = 75°$  $\theta_2 = 90°$

503

$\beta = 15°$

r

233

505

501

$\beta = \theta_2 - \theta_1$

## FIG. 5

102

605

603

611

609

607

619

613

## Fig. 6

Europäisches
Patentamt

European
Patent Office

Office européen
des brevets

# EUROPEAN SEARCH REPORT

Application Number

EP 20 18 0864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/141738 A1 (DORUM OLE HENRY [US]) 7 May 2020 (2020-05-07) * paragraph [0052]; figure 3 * ----- | 1-16 | INV. G01C21/34 G01C21/30 |
| A | US 9 696 165 B2 (UNIV MICHIGAN REGENTS [US]) 4 July 2017 (2017-07-04) * claim 1; figure 12 * ----- | 1-16 | |

TECHNICAL FIELDS
SEARCHED     (IPC)

G01C

The present search report has been drawn up for all claims

| Place of search | Date of completion of the search | Examiner |
|---|---|---|
| The Hague | 15 December 2020 | Asthalter, Tanja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 18 0864

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2020

| Patent document cited in search report | Publication date | Patent family member(s) | Publication date |
|---|---|---|---|
| US 2020141738 A1 | 07-05-2020 | NONE | |
| US 9696165 B2 | 04-07-2017 | US 2016223340 A1 | 04-08-2016 |
| | | WO 2016126786 A1 | 11-08-2016 |

EPO FORM P0459

For more details about this annex : see Official Journal of the European Patent Office, No. 12/82